# EUROPEAN PATENT SPECIFICATION

(11) **EP 0 815 299 B1**
(45) Date of publication and mention of the grant of the patent: **15.12.1999**
(21) Application number: 96901816.7
(22) Date of filing: 08.02.1996
(51) Int. Cl.: D01F 6/46, C08F 2/18, C08F 255/02

(54) **DYEABLE POLYOLEFIN FIBER**
FÄRBBARE POLYOLEFINFASER
FIBRE DE POLYOLEFINE POUVANT ETRE TEINTE

(30) Priority: 20.02.1995 FI 950755
(43) Date of publication of application: 07.01.1998
(73) Proprietor: BOREALIS A/S, 2800 Lyngby (DK)
(72) Inventor: VESTBERG, Torvald, FIN-06100 Porvoo (FI); TURUNEN, Olli, T., FIN-06400 Porvoo (FI); TUOMINEN, Olli, FIN-00840 Helsinki (FI)
(74) Representative: Bannerman, David Gardner
(86) International application number: FI9600073
(87) International publication number: WO9626308

(56) References cited:
- EP-A- 0 309 253
- EP-A- 0 418 861
- EP-A- 0 554 058

## Description

The invention relates to dyeable and printable polyolefins, and in particular the invention relates to dyeable polyolefins which can be easily processed in different ways, for example, be spun into fibers.

Polyolefin fibers have many good properties, such as low density, high strength, high resistance to chemicals and wear, and low price. However, polyolefin fibers are difficult to dye by the same methods as polyester or nylon fibers, since non-polar polyolefin does not have sites to which the dye can adhere. Attempts have been made to solve this problem by three principal methods: after-treatment of the fiber; copolymerization; or the adding of a suitable additive before spinning. The after-treatment of the fiber may be carried out either chemically, in which case the structure of the polymer is changed, or by adding to the fiber some substance to which the dye can adhere. After-treatment of the fiber is expensive, and the substances may be toxic or deleterious. Copolymerization of propylene with polar monomers by coordination polymerization is difficult or impossible. Copolymerization of ethylene with polar monomers by a high-pressure process is successful, but the polymers obtained are highly branched and therefore poorly suited for spinning. The additives added to the polyolefin before spinning are either polymeric or small-molecular substances. Polymeric additives contain polar groups to which the dye can adhere. When polymeric additives are used there is the problem that the polyolefin and the additive are not miscible with each other, and this has a negative effect on the spinnability of the product. A low-molecular substance does not affect spinnability, but it is neither chemically not adhesively bonded to the polyolefin and will therefore not stick to the polyolefin fiber and will become diffused, carrying the dyes with it. especially in connection with washing. The colorant may, of course, also be added as a pigment in the extruder before spinning, but in such a case only a few hues are available.

Patent EP 39207 discloses a dyeable polyolefin which is obtained by incorporating 0.1-30 % by weight of an ethylene/aminoalkyl acrylate copolymer into crystalline polyolefin. Preferably the copolymer is a copolymer of ethylene and dimethylaminoethyl methacrylate (DMAEMA).

Patent application publication EP 468519 discloses as a solution to the problem the modification of polypropylene fibers by blending with polypropylene small amounts of a copolymer of polyamide-6,6 and hexamethylene diamine and a sodium salt of 5-sulfoisophthalic acid.

According to application publication WO 85/04889, a polyolefin composition dyeable by conventional techniques is obtained by blending with polyolefin at least one metal sulfonate, for example sodium dodecylbenzene sulfonate.

EP-A-309253 discloses dyeable polypropylene fibers for clothes, the fibers containing an alkyl phosphate salt.

EP-A-418861 discloses methods of preparing polyolefin-vinylpolymer composites comprising impregnating a polyolefin with an aromatic vinyl monomer and a free radical initiator, and heating to cause the vinyl monomer to polymerise in the polyolefin matrix.

EP-A-554058 discloses a method for preparing a polyolefin-vinyl polymer composite in which 10-200 parts by weight of vinyl monomer and 0.01-4.0 parts by weight of, based on 100 parts by weight of vinyl monomer of a free radical initiator are impregnated into 100 parts by weight of polyolefin particles by blending at a temperature of 20-130°C in the absence of water whilst maintaining the particle structure of the polyolefin. This is stated to improve the strength and other physical properties of the composite.

However, it has now been observed, surprisingly, that the problems mentioned above can be solved by modifying a polyolefin with a polar monomer with so called solid state grafting by the method provided by claim I of the current invention. By this method a product can be obtained in which the polar monomer is polymerized to very small drops (< 1,0 µm) into the polyolefin matrix. Because the modifying agent is thus in polymeric form it does not diffuse out from the fiber and because the drop size is so small it does not have any bigger effect to the spinning properties. The polyolefin thus obtained can be easily dyed or printed by conventional methods, and it can be used for manufacturing, for example, spun fibers or split fibers. The use of modified polyolefin as a master batch is an economically preferable alternative.

Such polyolefin type which is spinnable and dyeable in such way as e.g. polyester fibers has not been available. According to the method of this invention such type can be achieved.

The invention provides a dyeable and printable polyolefin fiber according to claim 1.

The modification of polyolefin is carried out by so-called solid-state grafting, in which a polar monomer is added to the polyolefin, the monomer containing functional groups to which the dye can adhere. The polyolefin is impregnated with the added monomer together with an initiator such as peroxide, and when the temperature is raised the peroxide breaks down and initiates the polymerization of the monomer inside the polyolefin particle. The result is a product in which the polyolefin is the continuous phase and the polymerized monomer the dispersed phase. Since the polymerization is initiated by peroxides, some of the polymerized monomer is grafted to the polyolefin chain. This grafted portion serves as a compatibilizer in the blend and enables the structure in which the added and polymerized monomer is the dispersed phase to withstand machining and still be present in the completed polyolefin fiber. Since by solid-state grafting it is possible to add monomer up to tens of per cent, this modified polyolefin can be used as a master batch. For polyolefin fiber it suffices if it contains a few per cent of a polar polymer. The modified polyolefin can be blended with pure polyolefin in a separate machining step, and this blend can thereafter be run through the spinning machine. The modified polyolefin and the pure polyolefin may also be dry mixed and be thereafter run through the spinning machine. The obtained PO fiber is dyeable with a suitable dye in an aqueous solution or some other solvent.

The invention further provides a process for dyeing a polyolefin fiber of the invention by carrying out the dyeing in an aqueous solution using anionic, cationic, reactive or disperse dyes.

The modification of polyolefin by solid-state grafting can be carried out by any known method in which monomers are polymerized by free radical polymerization inside polyolefin pellets, preferably in accordance with Finnish patent 88170. In principle, the manufacture is carried out by blending the monomer, the peroxide and the polyolefin pellets at an elevated temperature, whereupon the pellets are impregnated with the peroxide and the monomer. The impregnation temperature is so low that the peroxide will not break down, but sufficiently high for the monomer and the peroxide to be absorbed by the polyolefin pellets. After the impregnation, the temperature is raised, whereupon the peroxide breaks down and initiates polymerization. During the impregnation the pellets swell somewhat, depending on the amount of monomer added, but they remain in pellet form throughout both the impregnation and the polymerization.

By the polyolefin modification, in accordance with the present invention, carried out by solid-state grafting, a product is obtained in which the polyolefin is the continuous phase, and the dispersed phase is a polymer which contains sites required for the adhering of the dye. Since in a product manufactured by solid-state grafting the polyolefin is the continuous phase, the blending of this product with pure polyolefin is easy and does not have a deleterious effect on spinning properties. If the polyolefin fiber is made from polypropylene, it is preferable to use polypropylene as the initial material also in the modification process. Thereby it is ensured that the polypropylene and the modified polypropylene are well miscible with each other. The situation is, of course, the same when polyethylene is used.

The polyolefin used in the modification

The polypropylene may be a homopolypropylene, a random polypropylene or a block polypropylene. A random polypropylene and a block polypropylene may contain at maximum 30 % by weight of comonomer. The comonomer used may be ethylene or other α-olefins; dienes such as hexadiene-1,4, hexadiene-1,5, heptadiene-1,6, 2-methylpentadiene-1,4, octadiene-1,7, 6-methylheptadiene-1,5; or polyenes such as octatriene and dicyclopentadiene.

The polyolefin may especially be a homopolymer of polypropylene or a copolymer of polypropylene with ethylene or other α-olefins. Alternatively the polyolefin may be a homopolymer of ethylene or a copolymer of ethylene with polypropylene or other α-olefins.

The polyethylene is preferably a linear polyethylene (HDPE, LLDPE), but a polyethylene prepared by a high-pressure process is also usable. Any conventionally used comonomers can be used as comonomers.

### Monomer/dye

The selection of the monomer to be used for the modification of polyolefin depends on the dye to be used. The dyes may be, for example, anionic, cationic, reactive, and disperse dyes. The monomer is selected so that it will form a sufficiently strong bond with the dye. If the dye is anionic (an acid dye), the polymer should have cationic groups to which the dye will be bound via ionic bonds. Such cationic groups include, for example, tertiary amino groups. If the dye is cationic, the polymer should have anionic groups to which the dye can be bound via ionic bonds. A disperse dye will bind to polymer via hydrogen bonds and/or by van der Waals' forces. Suitable groups to which disperse dye can bond are in such a case, for example, ester and OH groups. The monomer should have a double bond, and it must be polymerizable by the free radical mechanism. Examples of suitable monomer types by means of which polyolefin can be modified by solid-state grafting include alkyl acrylate and methacrylate; alkoxyalkyl acrylate and methacrylate; hydroxyalkyl acrylate and methacrylate; alkyl acrylamide and methacrylamide; alkyl and dialkyl aminoalkyl acrylate and methacrylate; alkyl and dialkyl aminoalkyl acrylamide and methacrylamide; alkylvinyl pyridine; monomers containing a carboxylic group; and oxazolines having a double bond. Individual examples of the above-mentioned and other monomers are alkyl acrylate and methacrylate having 1-4 carbon atoms in the alkyl chain; hydroxypropyl methacrylate; octyl acrylamide; diethylaminoethyl methacrylate; dimethylaminopropyl methacrylamide; and styrene. Monomers can be used either alone or as mixtures. Highly polar monomers may absorb poorly to non-polar polyolefin pellets, in which case it may be preferable to use as an auxiliary agent a solvent which is easily absorbed by polyolefin pellets at an elevated temperature. The solvent will facilitate the absorption of the polar monomer. Many aromatic solvents are suitable solvents. Styrene is one preferable solvent, since it can be copolymerized with another monomer, and in such a case the product will not contain solvents which should be removed before the use of the product in polyolefin fiber. The use of styrene is preferable also because in polymer form (polystyrene or poly(styrene-co-polar monomer) it is amorphous. This promotes the absorption of the dye by polyolefin fiber, since the dye can pass into the inner parts of the fiber by using the amorphous areas.

In solid-state grafting the medium is water. In this case it is preferable that the monomer used is as insoluble in water as possible. Water soluble monomers can be used, but in such a case the entire polymer amount will not polymerize into the polyolefin pellet; some is left in the aqueous phase. It is also preferable that the monomer is stable in hot water. If the monomer breaks down (e.g. becomes hydrolyzed) in hot water, and even if it has been absorbed by the polyolefin pellet, part of the monomer breaks down and only part is retained in the polyolefin for the dye to adhere in dyeing. Water soluble monomers and monomers breaking down in hot water may, of course, be used when so desired, but their use is uneconomical, since only a portion of the monomer used can be exploited in dyeing.

### Amount of monomer

The monomer amount used may be as low as possible, but it is economically advantageous to add as much of monomer as possible and to use the modified polyolefin as a master batch in polyolefin fiber. The largest possible amount of monomer depends both on the polyolefin and on the monomer type, but the limit is approx. 60 % by weight of the total amount of polyolefin and monomer. If more than 60 % by weight is added. there may be a phase reversal in the polymerization, in which case the polyolefin becomes the dispersed phase. Preferably the monomer amount used is 20-50 % by weight.

### Initiator

Suitable initiators include the initiators conventionally used in free radical polymerization of vinyl monomers, for example organic peroxides such as dibenzoyl peroxide; lauroyl peroxide; t-butyl perbenzoate; t-butylperoxy-2-ethyl hexanate; dicumyl peroxide; di-t-butyl peroxide; bis(t-butylperoxy-isopropyl)benzene: t-butylperoxy-isopropyl carbonate; 2,5-dimethyl-2,5-di-t-butylperoxy hexane; 2,5-dimethyl-2,5-di-t-butylperoxy hexyne-3; and azo compounds such as azobi-isobutyronitrile and azobisdimethyl valeronitrile.

Several initiators may be used simultaneously, in which case the polymerization is started at a low temperature by using a "low-temperature initiator" and is completed at a high temperature by using a "high-temperature initiator". In this manner, a maximally low content of residual monomer is accomplished. The suitable amount of initiator may be 0.01-2.00 % by weight, preferably 0.1-1.0 % by weight of the amount of monomer.

### Preparation, impregnation and polymerization of the modified polyolefin

The modified polyolefin may be prepared by any known method in which the polyolefin pellets are first impregnated with a monomer and an initiator, and thereafter the monomer is polymerized by raising the temperature. The impregnation with monomer and initiator can thus be carried out completely without water, with a small amount of water, by adding the water, or by adding the water when more than one-half of the monomer has become absorbed as described in Finnish patents FI85496, FI86642 and FI88170. The impregnation may also be carried out in a water suspension, as disclosed in patent US 4.412.938. The impregnation may also be carried out in accordance with German patent publication DE 2.907.662, in which case the monomer and the initiator are added slowly, in the course of several hours, at an elevated temperature into the midst of polyolefin particles in an aqueous suspension, in which case the absorption and the polymerization will occur simultaneously.

Preferably the impregnation and the polymerization are carried out by the method according to Finnish patent FI88170. In this case the amount of monomer may be up to 65 %.

### Properties of polyolefin modified by solid-state grafting

The "drop size" of the dispersed polymer in the polyolefin matrix is about 0.1-1.0 µm. Since peroxides are used for initiating the polymerization, a portion of the polymerized monomer is grafted to the polyolefin chain. This grafted portion serves as a compatibilizer in the blend and prevents the dispersed polymer from becoming agglomerated in large areas both in the machining step, if the modified polyolefin is blended with pure polyolefin in a separate machining step, and in the spinning step. Slight agglomeration may sometimes occur, in which case the dispersed areas grow to approximately double, but larger areas will not form, since the grafted portion stabilizes the structure.

### Final polyolefin composition

The final polyolefin composition contains 1-100 % by weight, preferably 5-40 % by weight, of polyolefin which has been modified by solid-state grafting and contains 1-60 % by weight, preferably 10-50 % by weight, of units which are derived from the polar monomer and to which dyes can adhere. The final polyolefin composition thus preferably contains 0.5-10 % by weight of polar units. The modified polyolefin is diluted according to need, depending on the final use. The diluting is preferably carried out by melt mixing, for example, in an extruder, but dry mixing may also be used.

### Manufacture of the product

The polyolefin blend or undiluted modified polyolefin, described above, may be used for making either spun fibers or split fibers.

In the manufacture of spun fibers, polymer pellets are melted in an extruder and are pressed by means of a melt pump through small perforations in the nozzle. The number of perforations in the nozzle varies, and it may be up to tens of thousands. Molten polymer is drawn downwards at high speed. whereby the fiber diameter is greatly decreased, and the polymer cools and solidifies. The fiber is usually stretched even further while cold or slightly heated, since thereby the strength of the fiber can be improved considerably. Finally the fiber is reeled. The spun fiber is used in particular in textile applications, such as home textiles, clothing, automobile upholstery, etc.

In industrial applications, such as the manufacture of ropes, bands, filters or large sacks. split fiber is often used. In this case, the polymer is made by conventional techniques into a film, which is cut or fibrillated into narrow strips and is stretched.

### Dyeing of the product

Modified polymer according to the invention may be dyed as such, or it may be blended with pure polyolefin, which is then dyed. Any conventional dyes, such as disperse, acid. reaction, vat, and metal complex dyes, can be used for the dyeing. The dyeing is carried out by conventional methods. Dyeing methods typically used are exhaust dyeing, continuous dyeing (thermosol process), and printing. The use of dyes of different types and examples of dyeing recipes are described in greater detail in the embodiment examples.

The invention is described in greater detail with the help of the following examples.

### A. Preparation of modified polyolefin

### Examples a- j

The polyolefin pellets, the monomer(s) and the initiator were placed in a reactor. The reactor was pressurized at a low mixing speed and was emptied using nitrogen at 7-8 bar three times to remove the oxygen. Thereafter the temperature was raised to the impregnation temperature, 50-130 °C, and was maintained at that temperature until most of the monomer and initiator had been absorbed by the polyolefin pellets. The impregnation time was 1-3 hours, depending on the polyolefin and the monomer type. Thereafter there were added the nitrogenated suspension water, which contained as the suspended material tricalcium phosphate, and the sodiumdodecylbenzene sulfonate. The temperature of the suspension water was the same as the impregnation temperature. After the addition of the water, the temperature was raised so much (100-150 °C) that the initiator began to break down and initiated polymerization. The polymerization time was 5-15 hours. After the polymerization, the product was washed and dried. Numerous products were prepared by this method by using different monomers and monomer blends; the results are compiled in Table 1.

The following monomers, initiators and polymers were used in the modifications:
BMA = butyl methacrylate
DMAPMA = dimethylaminopropyl methacrylate
2-HPMA = 2-hydroxypropyl methacrylate
OAA = octylacrylamide
MMA = methyl methacrylate
EMA = ethyl methacrylate
t-BPB = tert-butylperoxybenzoate
Trig 145 = Trigonox 145, manufacturer Akzo
Perk 14 = Perkadox 14, manufacturer Akzo
XB8050H = random polypropylene, melt index 8.0
XB6050H = random polypropylene, melt index 6.0
VB1950K = homopolypropylene, melt index 1.9
VC2512H = homopolypropylene, melt index 25
XB1850B = random polypropylene, melt index 1.8
XA3021 = random polypropylene, melt index 0.3
XB8054S = random polypropylene, melt index 8.0
PP1 = VC1235B = homopolypropylene, melt index 12
PP2 = VC3535H = homopolypropylene, melt index 35
PP3 = VC2535D = homopolypropylene, melt index 25
PE1 = HDPE, melt index 28
NCPE8020 = LLDPE, melt index 1.0

All of the polypropylenes were manufactured by Borealis Polymers Oy.

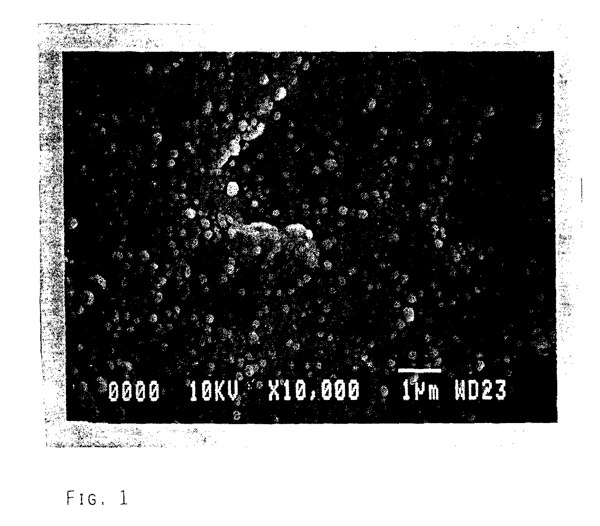

Figure 1 shows an SEM picture of the product of Example h in Table 1. This product contains 70 % by weight of polypropylene and 30 % by weight of poly(styrene-co-(2-hydroxypropylmethacrylate)). The picture shows that the poly(styrene(2-HPMA)) is dispersed as pearls having a size of approx. 0.3 µm.

### B. Making of fiber

### Blends 1-13

The modified polyolefin products prepared under A were blended with homopolypropylene or homopolyethylene before being spun either dry or in a separate machining step in molten state in an extruder.

Table 2 shows the blending ratios of modified polyolefin and unmodified polyolefin. as well as the spinning conditions.

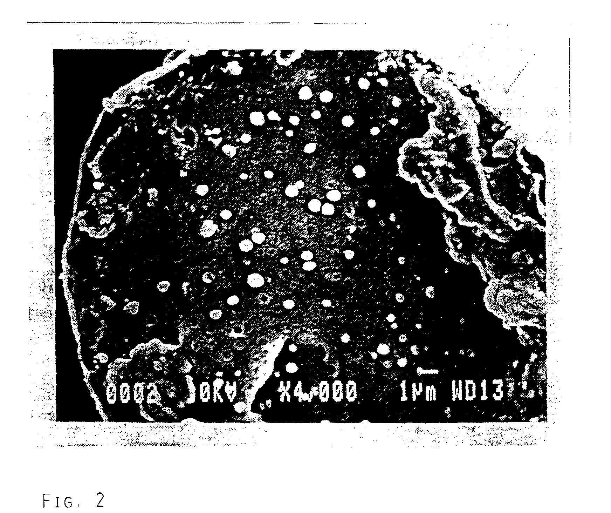

Figure 2 shows an SEM picture of a PP fiber containing 20 % by weight of the modified polypropylene product of Example h. The figure shows that the poly(styrene-co-(2-HPMA)) is dispersed as pearls having a size of approx. 0.4-0.9 µm in the polypropylene matrix. A comparison between Figures 1 and 2 shows that the drop size of the dispersed phase has increased somewhat, but the structure is stable, considering that this material has been machined both in an extruder and in a spinning machine.

The physical properties of the fibers are shown in Table 2. Modification does not substantially affect the strength properties of polypropylene.

**Table 1.**

| Preparation of modified PO by solid state grafting. | | | | | | |
|---|---|---|---|---|---|---|
| exp. | polypropylene w-% | monomer w-% | initiator w-% | impregnation °C | polym. temperature. °C | yield % |
| a | XB8050H, 80 | styrene 15 DMAPMA 15 | Trig 145, 0,1 | 132 | 135-150 | |
| b | XB6050H, 70 | BMA 15 DMAPMA 15 | Trig 145, 0,1 | 135 | 135-150 | 88 |
| c | VB1950K, 60 | styrene 40 | Perk 14, 0,6 | 101 | 135-145 | |
| d | VC2512H, 60 | styrene 20 BMA 20 | Perk 14, 0,3 | 114 | 135-145 | 99 |
| e | XB6050H, 70 | styrene 15 OAA 15 | Trig 145, 0,15 | 119 | 130-150 | 100 |
| f | XB1850B, 70 | styrene 10 2-HPMA 10 MMA 10 | Trig 145, 0,3 | 122 | 130-150 | 99 |
| g | XB1850B, 70 | styrene 20 HPMA 10 | Perk 14, 0,24 | 115 | 125-140 | 99 |
| h | XA3021, 70 | styrene 15 2-HPMA 15 | Perk 14, 0,24 | 122 | 125-140 | 99 |
| i | XB8054S, 60 | EMA 40 | Perk 14, 0,30 | 108 | 125-140 | 99 |
| j | XB8050B, 70 | styrene 18 2-HPMA 12 | Perk 14, 0,24 | 111 | 125-140 | 97 |
| k | VB1950K, 70 | EMA 30 | Perk 14, 0.60 | 112 | 125-140 | 99 |
| l | NCPE8020, 80 | EMA 20 | t-BPB, 0.28 | 110 | 110-130 | 99 |

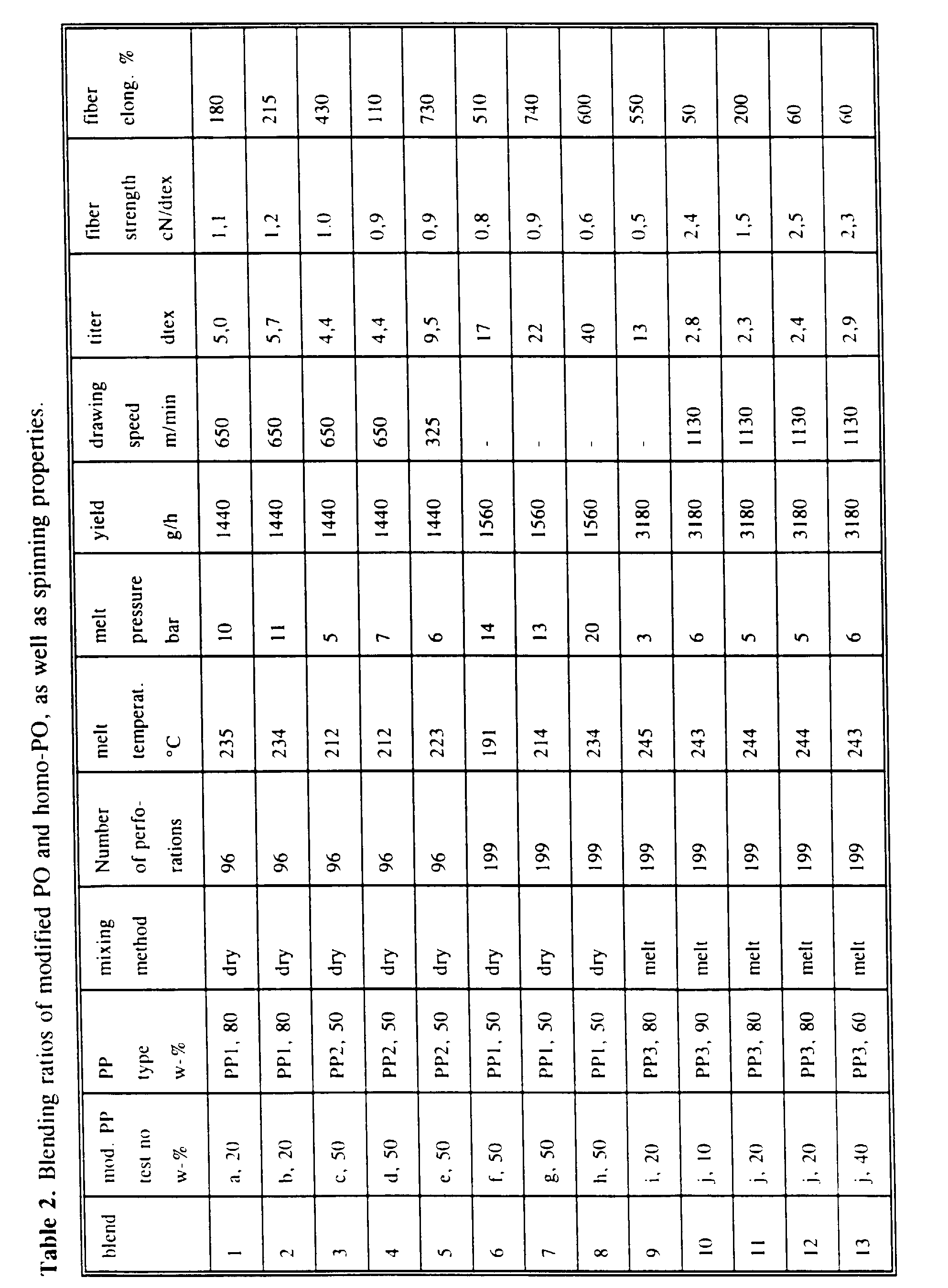

### C. Dyeing and test results

### Testing methods

The color difference, ΔE, is obtained by comparing the color of the dyed fiber to the color of the undyed fiber. The color measurements were performed using a Minolta Chroma Meter CR-210. The source of light was a so-called C-light source. In the color measurement, five different measurements of the sample were performed, and the final value for the sample was obtained as a mean of these measurements. The values range from 0 to 100, the best being 100.

Fastness to water wash was investigated by the method SFS 5065 (corresponds to ISO 105-CO6). The change of color of the samples and staining on the test fabrics were assessed by using gray and gray/white scales. The value may be 1-5, the best being 5.

Fastness to rubbing was investigated by the method SFSA 2979 (corresponds in part to ISO/R 105/I-1959 Part 18). The assessment was made using a gray/white scale. The values range from 1 to 5, the best being 5.

Fastness to dry cleaning was investigated according to the standard SFS-ISO 105-D01. The sample was kept for 30 minutes at 30 °C in trichloroethylene by using a Linitest apparatus. The amount of solvent was 200 ml. The fastness to dry cleaning was assessed on a gray scale. The values range from 1 to 5, the best being 5.

Fastness to light was investigated according to the standard SFS 2719/method 1. The exposure was by using an Original Hanau System Cassela apparatus with a mechanism for turning the samples. The temperature was 35-45 °C. The color fastness value was obtained from a blue scale which had been exposed for as long a time as had the samples. The values ranged from 1 to 8, the best being 8.

### Blends 1 and 2.

Blends 1 and 2, products a and b, were dyed using an acid dye. The dyeing recipe was:
- 1.0 wt. % Nylanthrene Red B-2BSA
- 0.2 wt. % Agent Atsa MD (wetting agent)
- 1.0 g/l Sodium acetate
- pH 3.5 Formic acid

Dyeing temperature program:
25 °C / 10 min; raising of the temperature to 100 °C / 75 min; 100 °C / 50 min; lowering of the temperature to 25 °C / 60 min.

The saponifying agent used was 0.5 g/l of Agent Atsa TE / 20 min at 60 °C.

Table 3 shows that the values of color difference and fastness to wash were in the same order as those for a commercial polyamide 6.6 fiber (windsheeter fabric). The color difference of pure polypropylene with acid dye is close to zero, so that the wash fastness values for pure polypropylene cannot be sensibly compared with the values for blends according to the invention. The results show that polypropylene which contains DMAPMA-modified polypropylene can well be dyed by using acid dyes.

**Table 3.**

| Test results for blends dyed with acid dye | | | |
|---|---|---|---|
| property | blend 1 | blend 2 | PA 6.6 |
| colour difference ΔE | 73 | 65 | 79 |
| fastness to water wash: | | | |
| color change of sample: | 5 | 4-5 | 5 |
| staining : | | | |
| wool (WO) | 4-5 | 3-4 | 3 |
| viscose (VI) | 5 | 5 | 4-5 |
| silk (SI) | 3 | 2 | 2 |
| polyamide 6.6 (PA) | 3-4 | 2 | 2 |
| cotton (CO) | 4-5 | 3-4 | 3 |
| cellul.triacetate (CTA) | 4-5 | 3-4 | 3 |
| polyester (PES) | 5 | 5 | |
| polyacrylic (PAN) | 5 | 5 | |
| fastness to rubbing: | | | |
| dry | 4 | 4-5 | 5 |
| wet | 2-3 | 3-4 | 5 |
| fastness to dry cleaning: | | | |
| sample | 5 | 5 | 5 |
| solution | 5 | 5 | 5 |
| cotton | 4-5 | 4-5 | 5 |

### Blends 3-9.

Blends 3-9, products c-i, were used for testing the effect of different polar monomers on the dyeability of polypropylene fiber with disperse dyes. Before dyeing the fibers were washed with a normal detergent and water. The dyeing recipe and temperature were:
- 1.0 wt. % dye, Resol Red K-2BLS 200 % or Resol Blue K-2GLS 200 %
- 0.2 wt % Agent Atsa MD, wetting agent
- 1 g/l Setamol VS, dispersing agent
- 0.3 ml/l acetic acid 80
- 60 minutes at 120 °C

The saponifying agent used was 0.5 g/l of Agent Atsa TE / 20 min at 60 °C.

Tables 4 and 5 show the dyeing and color fastness results for blends 3-9. The tables also show, for comparison, the values for polyester fiber. The results show that the blends according to the invention are dyeable with disperse dyes, and that color fastness values are also good, i.e. in the same order as the corresponding values for polyester fibers.

With styrene, which was the least polar of the monomers selected, varying results of dyeing were obtained for blend 3. With Resol Red the color difference was in the same order as for polyester, but with Resol Blue the color difference was only 43, which is too low, as was the color fastness in both cases. This observation corroborates the key point of the invention, according to which the monomer used for the modification should be polar.

A color difference of 42 was obtained using pure, non-modified polypropylene when the dyeing was carried out using Resol Red K-2BLS in the same manner as described above. A color difference of 42 is so low. merely a light tone. that comparing it with products according to the present invention is not relevant.

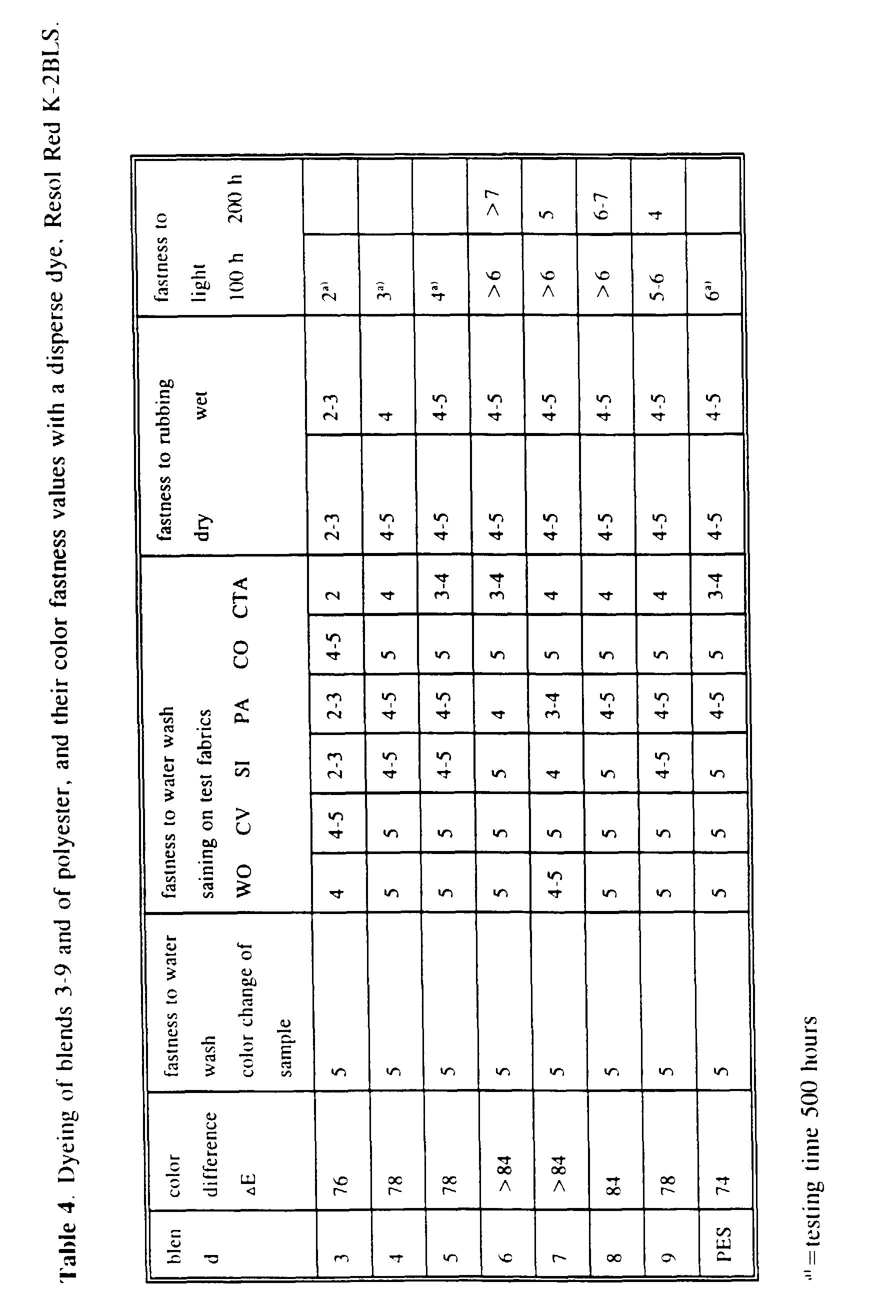

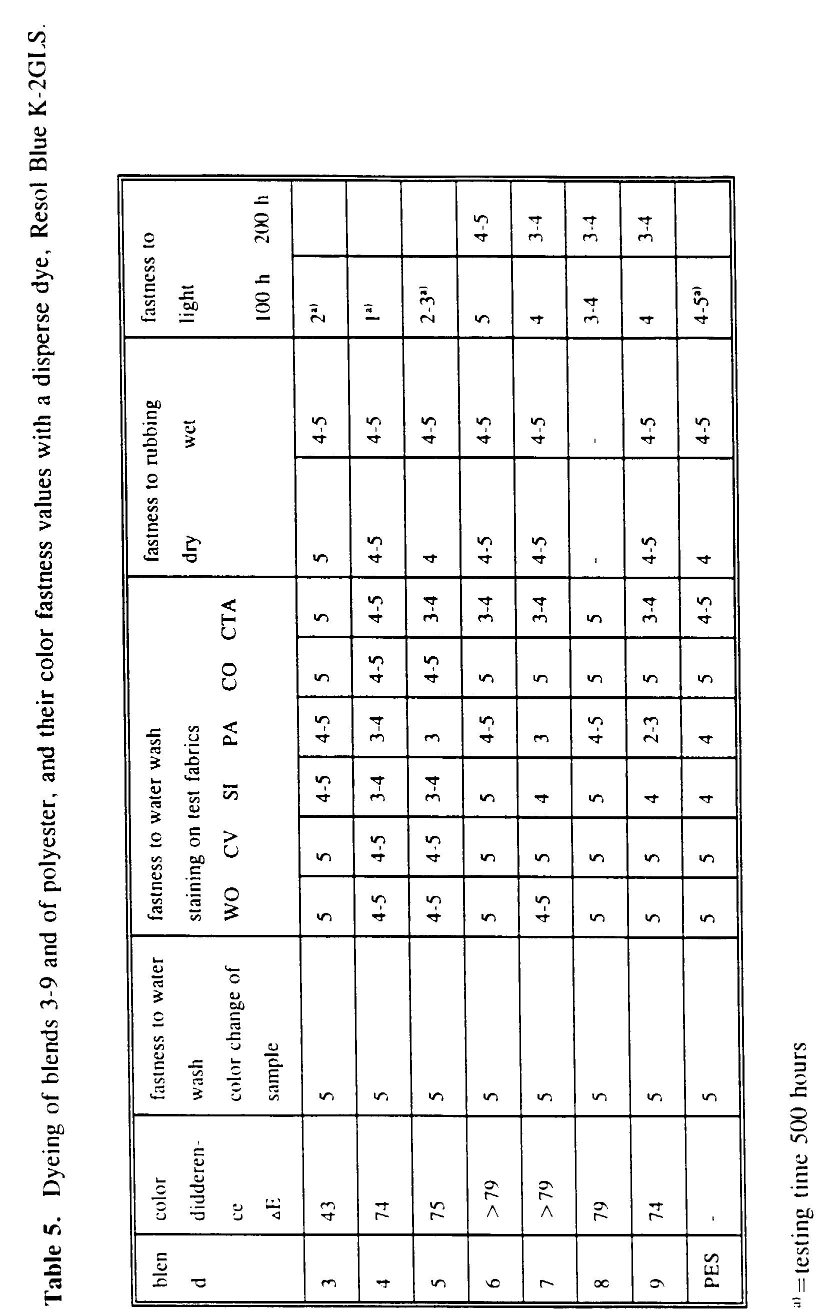

### Blends 10-13.

In this test series it was investigated how the amount of polypropylene modified by solid state grafting in polypropylene fiber affects dyeability and color fastness with disperse dye. The dyeing was carried out by the same procedure as for blends 3-9. The modified polypropylene contains 12 % by weight of 2-HPMA and 18 % by weight of styrene. i.e. it is product j in Table 1. This was blended with homopolypropylene in molten state according to Table 2, blends 10-13. Table 6 shows that dyeability and color fastness are improved if the concentration of the "active" component in the polypropylene fiber is increased. The only difference between blends 11 and 12 is in the spinning conditions, see Table 2. In dyeability and color fastness, blends 11 and 12 are almost equally good. Specifically in this test series, with this modified polypropylene, blend 10 evidently contains too little of the "active" component.

### Blends 14-16.

In these tests, the dyeability and color fastness properties of a product according to the invention were compared with those of a commercial polyester fiber. The dye was a disperse dye. The modified polypropylene was the same as product h in Table 1. The blend of modified polypropylene and homopolypropylene was made in an extruder. Table 7 shows the blending ratios and the spinning conditions.

The dyeing was performed by the same procedure as for blends 3-9. A comparison among blends 14 - 16 shows that the dyeability and color fastness values are the better the higher the content of modified polypropylene in the fiber. However, blend 14, which contains only 10 % by weight of modified polypropylene has rather good dyeability and color fastness values. The results are shown in Table 8.

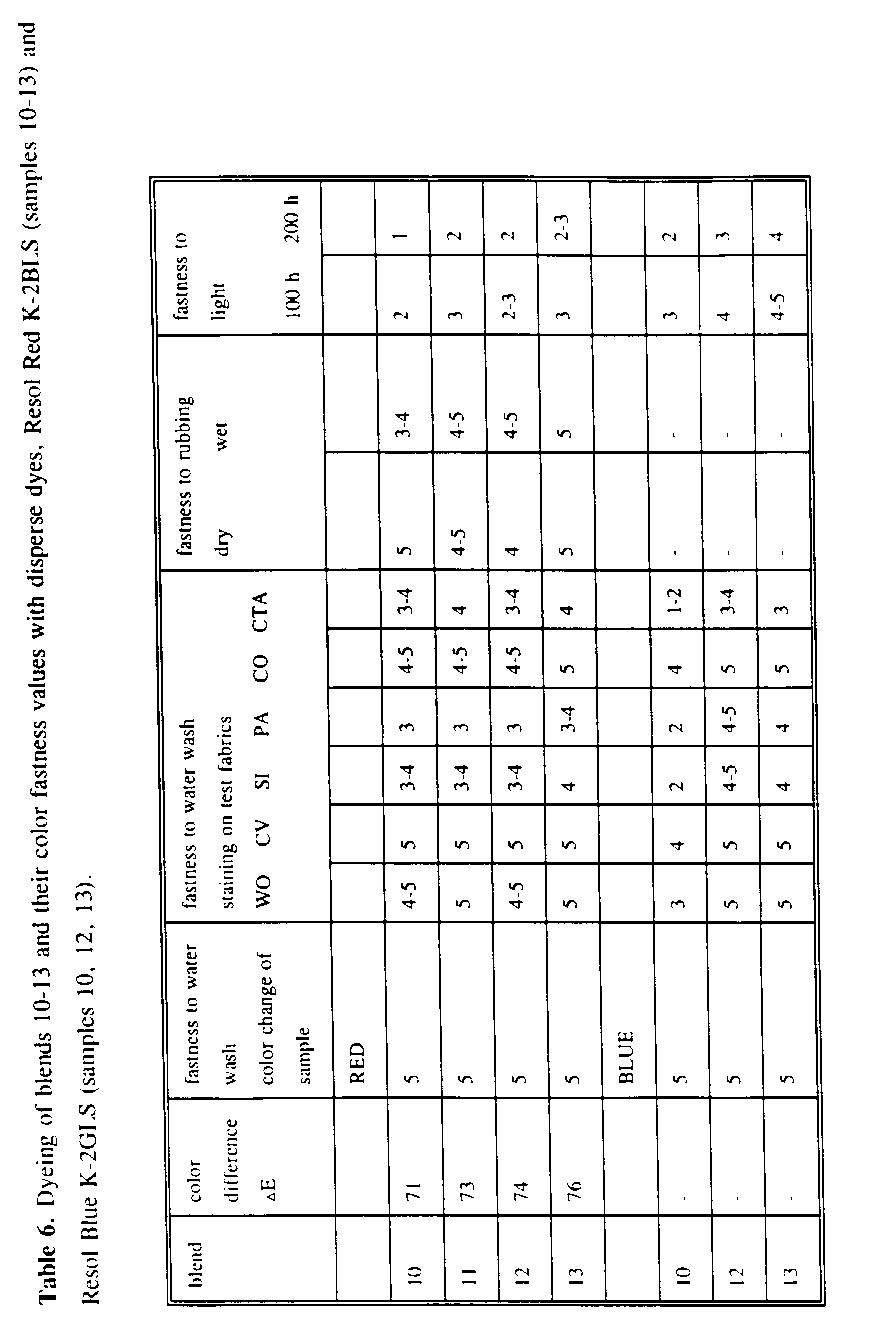

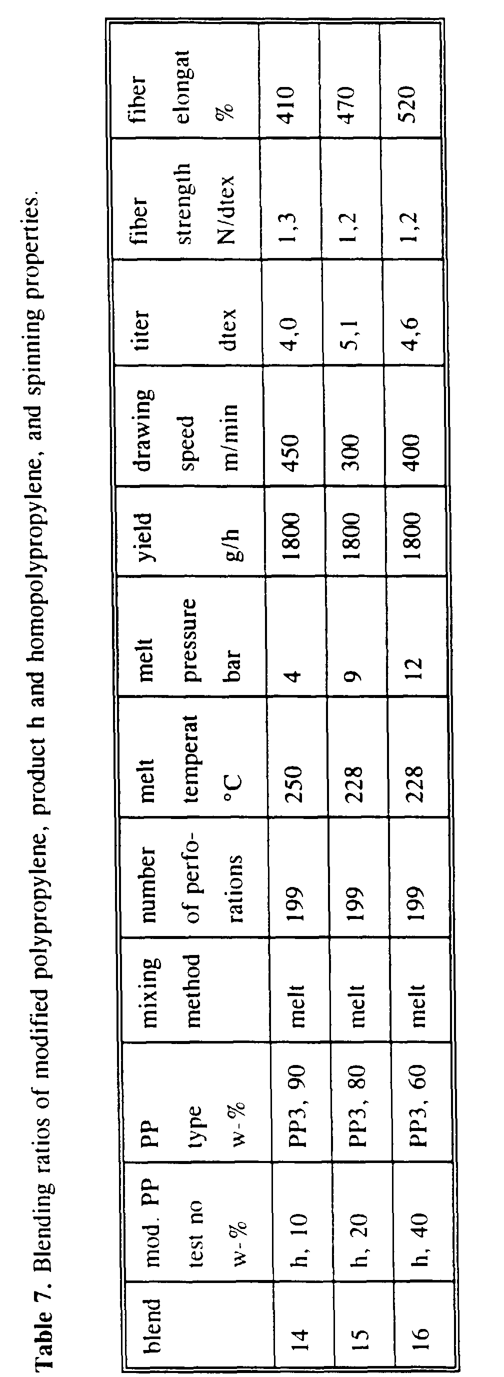

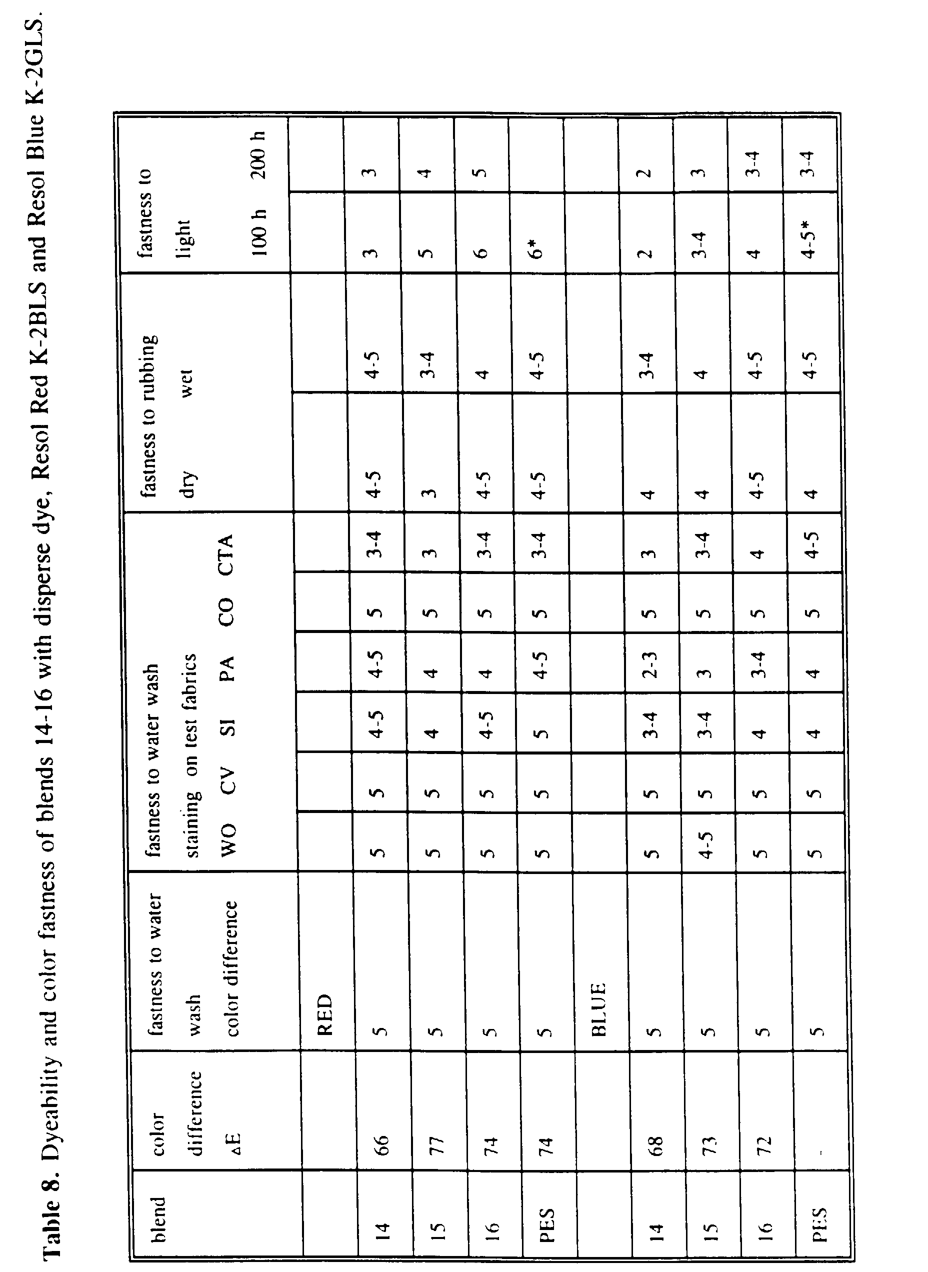

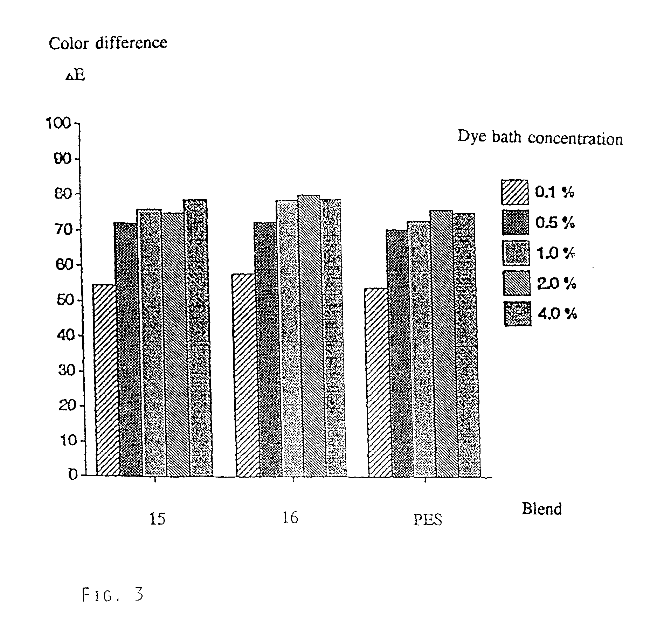

Blends 15 and 16 were compared with a commercial polyester fiber by using dyebaths at different concentrations. The dyeing procedure was otherwise the same as for blends 3-9. The results are compiled in Figure 3 and Table 9.

**Table 9.**

| Fastness to water wash and to rubbing of blends 15 and 16, with Resol Red K-2BLS, at different concentrations of the dyebath. | | | | | | | | | |
|---|---|---|---|---|---|---|---|---|---|
| dye amount % | fastness to rubbing | | fastness to water wash staining | | | | | | |
| blend 15 | dry | wet | color change | WO | CV | SI | PA | CO | CTA |
| 0,1 | 4-5 | 4-5 | 5 | 5 | 5 | 5 | 5 | 5 | 4-5 |
| 0,5 | 4-5 | 4-5 | 5 | 5 | 5 | 5 | 4-5 | 5 | 4 |
| 1,0 | 2 | 3 | 5 | 5 | 5 | 4 | 3-4 | 5 | 3 |
| 2,0 | 1 | 2 | 4-5 | 3 | 4-5 | 1-2 | 1-2 | 3-4 | 1 |
| 4,0 | 1 | 1-2 | 4-5 | 2 | 4 | 1 | 1-2 | 3 | 1 |

| blend 16 | | | | | | | | | |
|---|---|---|---|---|---|---|---|---|---|
| 0,1 | 4-5 | 4-5 | 5 | 5 | 5 | 5 | 5 | 5 | 4-5 |
| 0,5 | 4-5 | 4-5 | 5 | 5 | 5 | 5 | 5 | 5 | 4 |
| 1,0 | 4-5 | 4-5 | 5 | 5 | 5 | 5 | 4-5 | 5 | 4 |
| 2,0 | 3 | 3 | 5 | 4-5 | 5 | 3 | 3 | 5 | 2-3 |
| 4,0 | 1 | 1-2 | 4-5 | 3 | 4-5 | 1-2 | 2 | 3-4 | 1 |

| Polyester | | | | | | | | | |
|---|---|---|---|---|---|---|---|---|---|
| 0,1 | 4-5 | 5 | 5 | 5 | 5 | 5 | 5 | 5 | 5 |
| 0,5 | 4-5 | 4-5 | 5 | 5 | 5 | 5 | 5 | 5 | 4 |
| 1,0 | 4-5 | 4-5 | 5 | 5 | 5 | 4-5 | 4-5 | 5 | 3-4 |
| 2,0 | 4 | 4 | 5 | 5 | 5 | 3-4 | 4 | 5 | 3 |
| 4,0 | 2 | 3 | 5 | 4-5 | 5 | 2-3 | 2-3 | 4-5 | 2 |

The results show that a polypropylene which contains a polypropylene modified by the grafting of a suitable monomer has a dyeability comparable to that of polyester fiber, and its color fastness values are in the same order as those for polyester fiber. Table 9 shows that the color fastness values are lowered if the concentration of the dyebath is higher than 1 % by weight. When the concentration of the dyebath is 2 or 4 % by weight of dye in the dyebath, the fibers are oversaturated with dye and this "excess" dye easily washes out in color fastness tests.

### Blends 17-19.

In these tests, the suitability of modified polyolefins k (homopolypropylene-EMA) and 1 (LLDPE-EMA) was investigated. The blending ratios, spinning conditions and fiber properties are shown in Table 10, the dyeing results in Table 11. The dyeing procedure was the same as for blends 3-9.

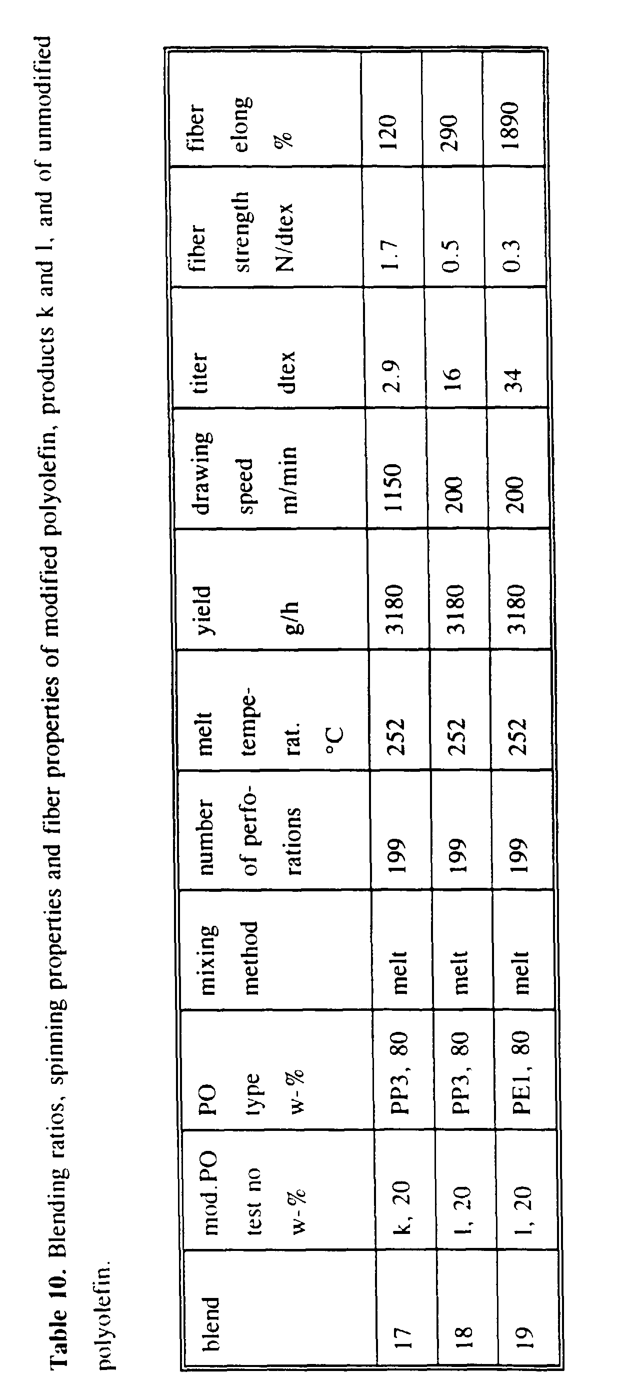

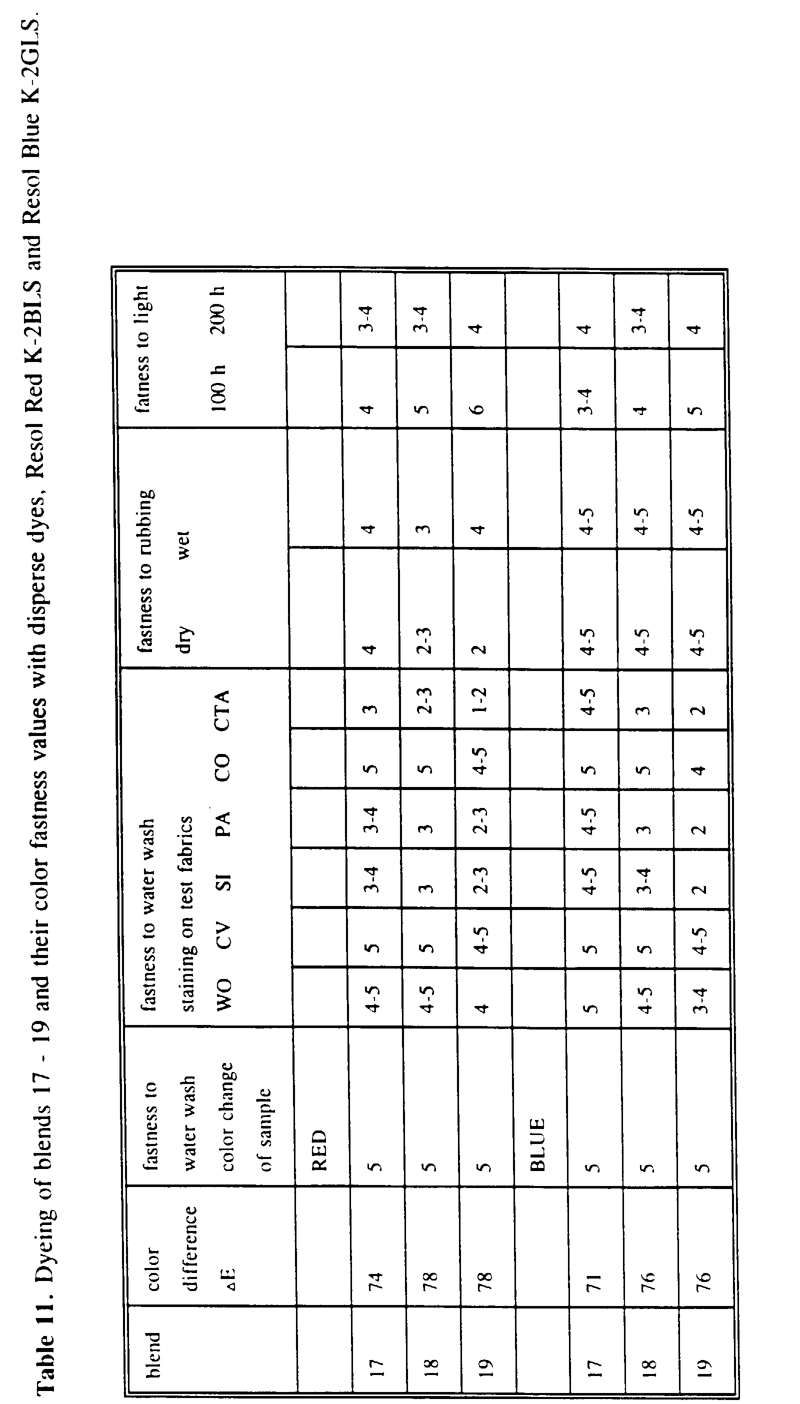

### D. Printability

The printability of a polypropylene knit was tested on two blends. One was the previously described blend 12 and the other similar to blend 9 but containing EMA 20 % by weight instead of 40 % by weight. The colorants used were disperse dyes Terasil Yellow GWL-01 150 %, Pink 3G, and Blue BGE 200 %. The dye paste contained
- 2 g/kg dye
- 400 g/kg thickener, Meyprogum TC-M25B-GM 2.5 %
- 1 g/kg wetting agent, Atsacryl NI
- acetic acid for pH control (4.5)

Prewetting was carried out using 1 g/l of Atsacryl NI, and the wetting was 100 %. The printing was carried out using the color paste described above, the fixing by means of water vapor (105 °C, 10 min, relative moisture 50 %). The knit was rinsed with cold water after the fixing. Since the color paste contained dye only 2 g/kg, the color tone of the knits was of an average level. After fixing the color remained in the fibers in the rinsing step, and the rinsing water did not contain dye. The dyeing and color fastness results are shown in Table 12.

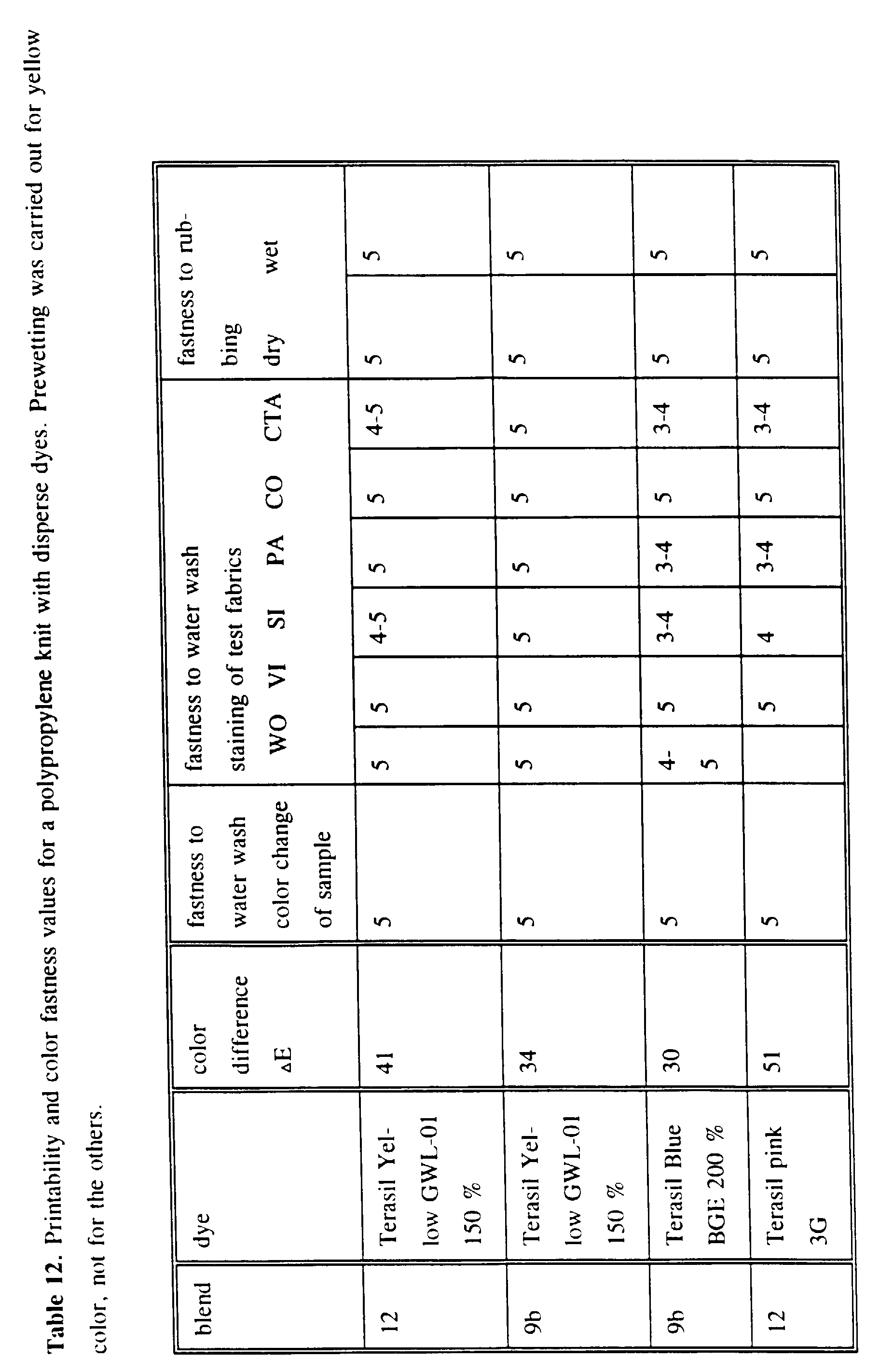

## Claims

1. A dyeable and printable polyolefin fiber which is made up of a blend of modified polyolefin and unmodified polyolefin, or of modified polyolefin alone, **characterized** in that the modified polyolefin is produced by allowing an initiator and one or more polar monomers having a double bond and being radically polymerizable to become absorbed into polyolefin, whereafter the temperature is raised and the monomer is polymerized inside the polyolefin matrix, forming a dispersed phase.

2. A polyolefin fiber according to Claim 1, **characterized** in that the polar monomer may form a covalent, ionic, hydrogen or van der Waals bond with a dye.

3. A polyolefin fiber according to Claim 1 or 2, **characterized** in that the polar monomer is acryl ester or vinyl ester.

4. A polyolefin fiber according to Claims 1-3, **characterized** in that the polar monomer is alkyl (meth)acrylate, alkoxyalkyl (meth)acrylate, hydroxyalkyl (meth)acrylate, alkyl (meth)acrylamide, alkyl- or dialkylaminoalkyl (meth)acrylamide, alkyl- or dialkylaminoalkyl (meth)acrylate, alkylvinyl pyridine, styrene, or oxazoline which contains double bonds.

5. A polyolefin fiber according to Claims 1-4, **characterized** in that the polar monomer is preferably alkyl (meth)acrylate having 1-4 carbon atoms in the alkyl chain, hydroxypropyl methacrylate, octyl acrylamide, or dimethylaminopropyl methacrylamide, which are used either alone or as a blend with one another or with styrene.

6. A polyolefin fiber according to Claims 1-5, **characterized** in that in the preparation of the modified polyolefin the polyolefin is a homopolymer of propylene or a copolymer of propylene with ethylene or other α-olefins.

7. A polyolefin fiber according to Claims 1-5, **characterized** in that in the preparation of the modified polyolefin the polyolefin is a homopolymer of ethylene or a copolymer of ethylene with propylene or other α-olefins.

8. A polyolefin fiber according to any of the above claims, **characterized** in that a solvent is used as an auxiliary agent in the impregnation with polar monomer.

9. A polyolefin fiber according to claim 8, wherein the solvent is styrene.

10. A polyolefin fiber according to any of above Claims 1-9 **characterized** in that the mixing of modified polyolefin and unmodified polyolefin is carried out by melt mixing in an extruder.

11. A polyolefin fiber according to any of above Claims 1- 9, **characterized** in that the mixing of modified polyolefin and unmodified polyolefin is carried out by dry mixing.

12. A polyolefin fiber according to any of the above claims, **characterized** in that the fiber is made by spinning.

13. A polyolefin fiber according to any of the above claims, **characterized** in that the fiber is a split fiber.

14. Process for dyeing a polyolefin fiber according to any of the above claims, **characterized** in that the dyeing is carried out in an aqueous solution by using anionic, cationic, reactive or disperse dyes.

15. The use of a polyolefin fiber according to any of Claims 1-14 as a textile fiber in home textiles, clothing or automobile upholstery, or as an industrial fiber in bands, ropes, filters or large sacks.

## Patentansprüche

1. Färbbare und bedruckbare Polyolefin-Faser, die aus einem Gemisch modifizierter Polyolefine und unmodifizierter Polyolefine oder aus modifizierten Polyolefinen allein hergestellt wird, dadurch gekennzeichnet, daß das modifizierte Polyolefin hergestellt wird, indem man einen Initiator und ein oder mehrere polare Monomere mit einer Doppelbindung, die radikalisch polymerisierbar sind, in ein Polyolefin absorbieren läßt, wonach die Temperatur erhöht wird und das Monomer in der Polyolefin-Matrix polymerisiert wird, wodurch eine disperse Phase gebildet wird.

2. Polyolefin-Faser nach Anspruch 1, dadurch gekennzeichnet, daß das polare Monomer eine kovalente, ionische, Wasserstoffbrücken- oder van der Waals-Bindung mit einem Farbstoff bilden kann.

3. Polyolefin-Faser nach Anspruch 1 oder 2, dadurch gekennzeichnet, daß das polare Monomer Acrylester oder Vinylester ist.

4. Polyolefin-Faser nach einem der Ansprüche 1 - 3, dadurch gekennzeichnet, daß das polare Monomer Alkyl(meth)acrylat, Alkoxyalkyl(meth)acrylat, Hydroxyalkyl(meth)acrylat, Alkyl(meth)acrylamid, Alkyl- oder Dialkylaminoalkyl(meth)acrylamid, Alkyl- oder Dialkylaminoalkyl(meth)acrylat, Alkylvinylpyridin, Styrol oder Oxazolin ist das Doppelbindungen enthält.

5. Polyolefin-Faser nach den Ansprüchen 1 - 4, dadurch gekennzeichnet, daß das polare Monomer vorzugsweise Alkyl(meth)acrylat mit 1 - 4 Kohlenstoff-Atomen in der Alkyl-Kette, Hydroxypropyl-Methacrylat, Octylacrylamid oder Dimethylaminopropylmethacrylamid ist, welches entweder allein oder als Gemisch miteinander oder mit Styrol verwendet wird.

6. Polyolefin-Faser nach den Ansprüchen 1 - 5, dadurch gekennzeichnet, daß bei der Herstellung des modifizierten Polyolefins das Polyolefin ein Homopolymer von Propylen oder ein Copolymerisat von Propylen mit Ethylen oder anderen α-Olefinen ist.

7. Polyolefin-Faser nach den Ansprüchen 1 - 5, dadurch gekennzeichnet, daß bei der Herstellung des modifizierten Polyolefins das Polyolefin ein Homopolymer von Ethylen oder ein Copolymerisat von Ethylen mit Propylen oder anderen A-Olefinen ist.

8. Polyolefin-Faser nach einem der vorhergehenden Ansprüche, dadurch gekennzeichnet, daß als Hilfsmittel bei der Imprägnierung mit polarem Monomer ein Lösungsmittel verwendet wird.

9. Polyolefin-Faser nach Anspruch 8, wobei das Lösungsmittel Styrol ist.

10. Polyolefin-Faser nach einem der Ansprüche 1 - 9, dadurchgekennzeichnet, daß das Mischen von modifiziertem Polyolefin und unmodifiziertem Polyolefin durch Schmelzvermischung in einem Extruder durchgeführt wird.

11. Polyolefin-Faser nach einem der Ansprüche 1 - 9, dadurch gekennzeichnet, daß das Mischen von modifiziertem Polyolefin und unmodifiziertem Polyolefin durch Trockenvermischung durchgeführt wird.

12. Polyolefin-Faser nach einem der vorhergehenden Ansprüche, dadurch gekennzeichnet, daß die Faser durch Spinnen hergestellt wird.

13. Polyolefin-Faser nach einem der vorhergehenden Ansprüche, dadurch gekennzeichnet, daß die Faser eine Spaltfaser ist.

14. Verfahren zum Färben einer Polyolefin-Faser nach einem der vorhergehenden Ansprüche, dadurch gekennzeichnet, daß das Färben in einer wäßrigen Lösung durchgeführt wird, wobei anionische, kationische, Reaktiv- oder Dispersionsfarbstoffe verwendet werden.

15. Verwendung einer Polyolefin-Faser nach einem der Ansprüche 1 - 14 als Textilfaser in Heimtextilien, Kleidung oder Kraftfahrzeug-Polstermaterial oder als Industriefaser in Bändern, Seilen, Filtern oder großen Säcken.

## Revendications

1. Fibre de polyoléfine pouvant être teinte et imprimée, constituée d'un mélange de polyoléfine modifiée et de polyoléfine non modifiée, ou de polyoléfine modifiée seule,
caractérisée en ce que
la polyoléfine modifiée est produite en laissant un initiateur et un ou plusieurs monomères polaires avoir une double liaison en étant radicalement polymérisables pour être absorbés dans la polyoléfine, après quoi la température est augmentée et le monomère est polymérisé à l'intérieur de la matrice de polyoléfine, en formant une phase dispersée.

2. Fibre de polyoléfine selon la revendication 1,
caractérisée en ce que
le monomère polaire peut former une liaison covalente, ionique, hydrogène ou de Van der Waals, avec un colorant.

3. Fibre de polyoléfine selon la revendication 1 ou la revendication 2,
caractérisée en ce que
le monomère polaire est un acryl-ester ou un vinyle-ester.

4. Fibre de polyoléfine selon les revendications 1-3,
caractérisé en ce que
le monomère polaire est de l'alkyl (méth)acrylate, de l'alkoxyalkyl (méth)acrylate, de l'hydroxyalkyl (méth)acrylate, de l'alkyl (méth)acrylamide, de l'alkyl-ou dialkylaminoalkyl (méth)acrylamide, de l'alkyl-ou dialkylaminoalkyl (méth)acrylate, de l'alkylvinyle pyridine, du styrène, ou de l'oxazoline contenant des liaisons doubles.

5. Fibre de polyoléfine selon les revendications 1-4,
caractérisée en ce que
le monomère polaire est de préférence de l'alkyl (méth)acrylate comportant 1-4 atomes de carbone dans la chaîne alkyl, de l'hydroxypropyl métacrylate, de l'octyl acrylamide, ou du diméthylamiopropyl méthacrylamide qui sont utilisés soit seuls soit en mélange les uns avec les autres ou avec du styrène.

6. Fibre de polyoléfine selon les revendications 1-5,
caractérisé en ce que
dans la préparation de la polyoléfine modifiée, la polyoléfine est un homopolymère de propylène ou un copolymère de propylène avec de l'éthylène ou d'autres α-oléfines.

7. Fibre de polyoléfine selon les revendications 1-5,
caractérisée en ce que
dans la préparation de la polyoléfine modifiée, la polyoléfine est un homopolymère d'éthylène ou un copolymère d'éthylène avec du propylène ou d'autres α-oléfines.

8. Fibre de polyoléfine selon l'une quelconque des revendications précédentes,
caractérisée en ce qu'
un solvant est utilisé comme agent auxiliaire dans l'imprégnation avec un monomère polaire.

9. Fibre de polyoléfine selon la revendication 8,
dans laquelle
le solvant est du styrène.

10. Fibre de polyoléfine selon l'une quelconque des revendications 1-9 ci-dessus,
caractérisée en ce que
le mélange de polyoléfine modifiée et de polyoléfine non modifiée est effectué par mélange en fusion dans un extrudeuse.

11. Fibre de polyoléfine selon l'une quelconque des revendications 1-9 ci-dessus,
caractérisée en ce que
le mélange de polyoléfine modifiée et de polyoléfine non modifiée est effectué par mélange à sec.

12. Fibre de polyoléfine selon l'une quelconque des revendications précédentes,
caractérisée en ce que
la fibre est réalisée par filage.

13. Fibre de polyoléfine selon l'une quelconque des revendications précédentes,
caractérisée en ce que
la fibre est une fibre fendue.

14. Processus de teinture d'une fibre de polyoléfine selon l'une quelconque des revendications précédentes,
caractérisé en ce que
la teinture est effectuée dans une solution aqueuse en utilisant des colorants anioniques, cationiques, réactifs ou dispersifs.

15. Utilisation d'une fibre de polyoléfine selon l'une quelconque des revendications 1-14,
comme fibre textile dans des textiles ménagers, des vêtements ou de la garniture intérieure d'automobile, ou encore comme fibre industrielle dans des bandes, des cordages, des filtres ou des grands sacs.
